# EUROPEAN PATENT APPLICATION

(11) **EP 4 040 543 A1**
(43) Date of publication of application: **10.08.2022**
(21) Application number: 20904592.1
(22) Date of filing: 30.10.2020
(51) Int. Cl.: H01M 4/58

(54) **BINARY LITHIUM-RICH CARBONATE PRECURSOR, PREPARATION METHOD THEREFOR AND APPLICATION THEREOF**

(30) Priority: 26.12.2019 CN 201911368620
(71) Applicant: SVOLT ENERGY TECHNOLOGY CO., LTD, Changzhou, Jiangsu 213200 (CN)
(72) Inventor: REN, Haipeng, hangzhou, Jiangsu 213200 (CN); WAN, Jiangtao, hangzhou, Jiangsu 213200 (CN); CHA, Guemju, hangzhou, Jiangsu 213200 (CN); ZHANG, Yongjie, hangzhou, Jiangsu 213200 (CN); ZHANG, Ning, hangzhou, Jiangsu 213200 (CN); CHEN, Tingting, hangzhou, Jiangsu 213200 (CN)
(74) Representative: Cesa, Roberta
(86) International application number: PCT/CN2020/125053
(87) International publication number: WO 2021/129139

(57) **Abstract**

A binary lithium-rich carbonate precursor, a preparation method therefor and an application thereof. The precursor has a chemical formula of Ni(1-X)MnXCO3, wherein X is 0.6-0.7. The binary lithium-rich carbonate precursor is of a solid spherical structure having a small particle size, and has the advantages of a controllable particle size, uniform particle size distribution, high degree of sphericity, a smooth spherical surface, and excellent electrochemical performance and energy density.

## Description

### TECHNICAL FIELD

The present disclosure relates to the field of lithium batteries, for example, a binary lithium-rich carbonate precursor, a method for preparing the same and a use thereof.

### BACKGROUND

In recent years, lithium-ion batteries have become the main energy source for portable electronic devices, household appliances, electric vehicles and energy storage systems due to their advantages of a high energy density, high thermal stability and a long battery lifetime. Despite such successful applications, the current lithium-ion battery technology still cannot meet a wide range of consumer requirements.

The main disadvantages of the lithium-ion batteries are a high cost and an insufficient energy density so that the electric vehicles provide a far shorter mileage than vehicles using internal combustion engines. In order for the electric vehicles using the lithium-ion batteries to compete with the vehicles using internal combustion engines, it is necessary to increase the energy density, reduce the cost, and prolong the service life of the existing lithium-ion battery.

The overall performance of the lithium-ion battery is limited by a positive electrode to a large extent. In the composition of the lithium-ion battery, the positive electrode is most expensive and heaviest. Therefore, an increase of the energy density of the positive electrode will provide the electric vehicles with cheaper and lighter batteries. In the related technics, to achieve the energy density required by the electric vehicles, the content of Ni in a nickel cobalt aluminum oxide (NCA) or nickel cobalt manganese oxide (NCM) cathode material is increased to improve the discharge capacity. For example, the content of Ni is made far more than 80%, that is, x is far greater than 0.8 in order to provide a discharge capacity greater than 200mAh/g. Although the required additional capacity is provided due to the richness in nickel (x > 0.8), the rapid decay in capacity and the good activity of Ni⁴⁺ cause a series of problems on the lifetime and safety of batteries. Lithium-rich manganese-based cathode materials have the potential of development due to the advantages of a large discharge capacity, a low price and environmental friendliness, which have been widely regarded as the most suitable cathode materials for power batteries so far.

At present, lithium-rich hydroxide precursors are mostly used in the market. However, hydroxide precursors require ammonia to be used during preparation, which has an extremely bad effect on the environment.

### SUMMARY

The present disclosure provides a binary lithium-rich carbonate precursor, a method for preparing the same and use thereof. The binary lithium-rich carbonate precursor of the present disclosure has the structure of a solid sphere with a small particle size and the advantages of a controllable particle size, uniform particle size distribution, high sphericity, a smooth spherical surface, excellent electrochemical performance and an excellent energy density and can be stably produced in both an ammonia system and an ammonia-free system. Especially in the ammonia-free system, no ammonia-containing wastewater is produced so that the binary lithium-rich carbonate precursor is environmentally friendly. At the same time, the binary lithium-rich carbonate precursor contains no metal cobalt and has a reduced raw material cost and causes no environmental pollution compared with a ternary nickel-cobalt-manganese precursor. In addition, a cathode material prepared by use of the precursor has a relatively high specific capacity and excellent cycle performance and electrochemical discharge performance.

In an embodiment, the present disclosure provides a binary lithium-rich carbonate precursor having a chemical formula of Ni_{(1-X)}Mn_{X}CO₃, where X is 0.6 to 0.7.

The binary lithium-rich carbonate precursor provided by the present disclosure has the structure of a solid sphere with a small particle size and the advantages of a controllable particle size, uniform particle size distribution, high sphericity, a smooth spherical surface, excellent electrochemical performance and an excellent energy density and can be stably produced in both an ammonia system and an ammonia-free system. Especially in the ammonia-free system, no ammonia-containing wastewater is produced so that the binary lithium-rich carbonate precursor is environmentally friendly. At the same time, the binary lithium-rich carbonate precursor contains no metal cobalt and has a reduced raw material cost and causes no environmental pollution compared with a ternary nickel-cobalt-manganese precursor. In addition, a cathode material prepared by use of the precursor has a relatively high specific capacity and excellent cycle performance and electrochemical discharge performance.

In an embodiment, the precursor has a particle size of 1 micron to 2 microns.

In an embodiment, the present disclosure provides a method for preparing the binary lithium-rich carbonate precursor, comprising the following steps:
(1) mixing a soluble nickel salt and a soluble manganese salt to obtain mixed metal salts;
(2) in the presence of nitrogen, stirring a part of the mixed metal salts and a precipitant for co-precipitation in an ultrasonic environment to obtain a reaction solution containing primary nanoparticles;
(3) continuously adding another part of the mixed metal salts and the precipitant to the reaction solution containing primary nanoparticles for continual co-precipitation and then carrying out aging to obtain an aged material;
(4) mixing the aged material with a detergent through stirring to obtain a material after primary washing;
(5) subjecting the material after primary washing to primary dehydration to obtain a material after primary dehydration;
(6) stirring the material after primary dehydration for secondary washing and dehydration to obtain a material after secondary dehydration; and
(7) drying the material after secondary dehydration and sieving the dried material for iron removal to obtain the binary lithium-rich carbonate precursor.

In an embodiment, in step (2), the stirring is ultrasound.

In a method for preparing the binary lithium-rich carbonate precursor provided in an embodiment of the present disclosure, mixed metal salts containing a soluble nickel salt and a soluble manganese salt are co-precipitated with a precipitant in an ultrasonic environment in the presence of nitrogen, where under the action of ultrasound, the reaction system is more uniform and the metal salts contact and react with the precipitant more smoothly so that a reaction solution containing primary nanoparticles having a small particle size can be obtained; then, the mixed metal salts and the precipitant are continuously added to the reaction solution containing primary nanoparticles, that is, the primary nanoparticles having a small particle size are used as seeds for co-precipitation; finally, after aging and the subsequent procedures of washing, dehydration, drying and sieving for iron removal the binary lithium-rich carbonate precursor can be prepared. The binary lithium-rich carbonate precursor has the structure of a solid sphere and the advantages of a controllable particle size, uniform particle size distribution, high sphericity, a smooth spherical surface, excellent electrochemical performance and an excellent energy density and can be stably produced in both an ammonia system and an ammonia-free system. Especially in the ammonia-free system, no ammonia-containing wastewater is produced so that the binary lithium-rich carbonate precursor is environmentally friendly. At the same time, the binary lithium-rich carbonate precursor contains no metal cobalt and has a reduced raw material cost and causes no environmental pollution compared with a ternary nickel-cobalt-manganese precursor. In addition, a cathode material prepared by use of the precursor obtained by the method has a relatively high specific capacity and excellent cycle performance and electrochemical discharge performance.

In an embodiment, in step (1), the soluble nickel salt and the soluble manganese salt are mixed according to a molar ratio (0.3-0.4): (0.6-0.7) of nickel to manganese.

In an embodiment, in step (1), in the mixed metal salts, the soluble nickel salt and the soluble manganese salt each independently has a concentration of 0.5-3 mol/L.

In an embodiment, in step (1), the soluble nickel salt is at least one selected from nickel chloride and nickel sulfate.

In an embodiment, in step (1), the soluble manganese salt is at least one selected from manganese chloride and manganese sulfate.

In an embodiment, in step (2), the stirring is carried out at a rotational speed of 700-100 rpm.

In an embodiment, in step (2), a molar ratio of the mixed metal salts to the precipitant is 1: (2-4).

In an embodiment, in step (2), the co-precipitation is carried out for 60-180 minutes at an ultrasonic intensity of 30-50 Hz and a temperature of 40-70 degrees Celsius.

In an embodiment, in step (2), the primary nanoparticles in the reaction solution containing primary nanoparticles have a particle size of 50-500 nanometers.

In an embodiment, in step (2), the precipitant is at least one selected from sodium carbonate, ammonium carbonate, ammonium bicarbonate and ammonia.

In an embodiment, in step (2), the sodium carbonate has a concentration of 1-5 mol/L.

In an embodiment, in step (2), the ammonium carbonate has a concentration of 1-4 mol/L.

In an embodiment, in step (2), the ammonium bicarbonate has a concentration of 1-4 mol/L.

In an embodiment, in step (2), the ammonium has a concentration of 2-12 mol/L.

In an embodiment, in step (3), the mixed metal salts and the precipitant are added at a speed of 1-3 mL/min.

In an embodiment, in step (3), the co-precipitation is carried out for 10-20 hours at a controlled pH of 8.2-9.

In an embodiment, in step (3), the aging is carried out for 10-30 hours.

In an embodiment, the present disclosure provides a cathode material, which is prepared by use of the precursor or the precursor prepared by the method. The cathode material has a relatively high specific capacity and excellent cycle performance and electrochemical discharge performance.

In an embodiment, the present disclosure provides a lithium battery having the cathode material. The lithium battery has a long cycle life as well as high specific energy.

In an embodiment, the present disclosure provides a vehicle having the lithium battery. Therefore, the vehicle loaded with the preceding lithium battery with high specific energy and a long cycle life has an excellent cruising distance, thereby meeting the requirements of consumers.

In the present disclosure, the particle size refers to an average particle size.

### BRIEF DESCRIPTION OF DRAWINGS

The drawings are intended to provide a further understanding of solutions of the present disclosure, constitute a part of the description, and explain the solutions of the present disclosure in conjunction with embodiments of the present disclosure and do not limit the solutions of the present disclosure.
FIG. 1 is a flowchart of a method for preparing a binary lithium-rich carbonate precursor according to an embodiment of the present disclosure.
FIG. 2 shows an image of a binary lithium-rich carbonate precursor on a scanning electron microscope according to an embodiment of the present disclosure.
FIG. 3 is a plane view of an image of a binary lithium-rich carbonate precursor on a scanning electron microscope according to an embodiment of the present disclosure.

### DETAILED DESCRIPTION

In related technics, there are a few or no studies on carbonate precursors and cathode materials thereof, especially lithium-rich carbonate precursors. However, most of ternary carbonate precursor materials that have been reported have some problems such as uneven particle size distribution, poor sphericity and an inability to be continuously produced. Carbonate precursors grow too fast during preparation and the growth speed cannot be controlled so that it is very difficult to prepare carbonate precursors with a small particle size.

Carbonate precursors with a small particle size remain to be further studied.

In an embodiment, the present disclosure provides a binary lithium-rich carbonate precursor having a chemical formula of Ni_{(1-X)}Mn_{X}CO₃, where X is 0.6 to 0.7. The inventors have found that the binary lithium-rich carbonate precursor has the structure of a solid sphere with a small particle size and the advantages of a controllable particle size, uniform particle size distribution, high sphericity, a smooth spherical surface, excellent electrochemical performance and an excellent energy density and can be stably produced in both an ammonia system and an ammonia-free system. Especially in the ammonia-free system, no ammonia-containing wastewater is produced so that the binary lithium-rich carbonate precursor is environmentally friendly. At the same time, the binary lithium-rich carbonate precursor contains no metal cobalt and has a reduced raw material cost and causes no environmental pollution compared with a ternary nickel-cobalt-manganese precursor. In addition, a cathode material prepared by use of the precursor has a relatively high specific capacity and excellent cycle performance and electrochemical discharge performance. Specifically, the value of x in the chemical formula of the preceding precursor may be, for example, 0.6, 0.61, 0.69 or 0.7. The inventors have found that the composition with high manganese content is selected since a lithium-rich cathode material prepared by use of such precursors is more stable. If too low manganese content is selected, an unstable LiMO₂ structure instead of a stable Li₂MnO₃ structure is formed when the precursor is mixed with a lithium salt and calcined into a lithium-rich cathode material. Therefore, the required lithium-rich cathode material cannot be prepared with too low manganese content.

In an embodiment, the precursor has a particle size of 1 micron to 2 microns, for example, 1 micron, 1.1 microns, ..., 1.9 microns or 2 microns. The inventors have found that the cathode material prepared by use of the precursor with this range of particle sizes has better electrochemical performance, especially rate capability and initial efficiency, than a cathode material prepared by use of a precursor with a large particle size.

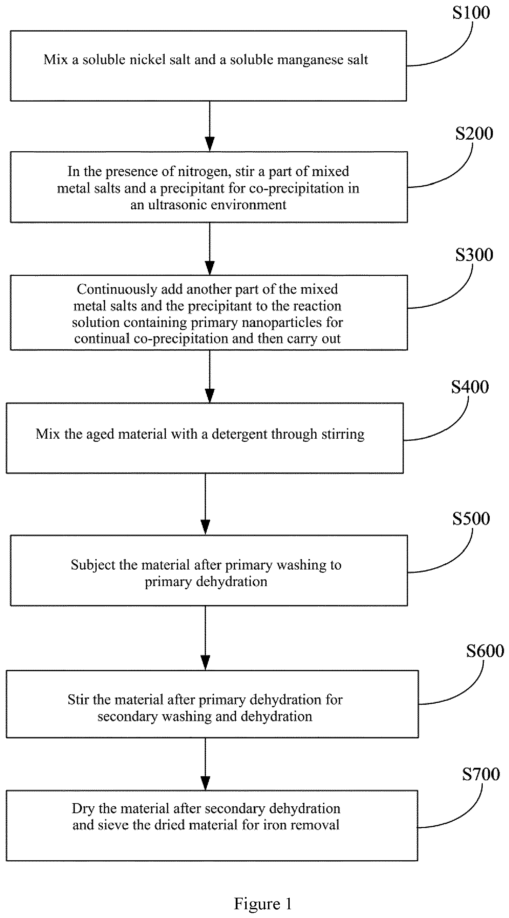

In an embodiment, the present disclosure provides a method for preparing the binary lithium-rich carbonate precursor. Referring to FIG. 1, the method includes steps described below.

In S100, a soluble nickel salt is mixed with a soluble manganese salt.

In this step, the soluble nickel salt is mixed with the soluble manganese salt to obtain mixed metal salts.

In an embodiment, the soluble nickel salt is at least one selected from nickel chloride and nickel sulfate, and the soluble manganese salt is at least one selected from manganese chloride and manganese sulfate.

In an embodiment, in the mixed metal salts, the soluble nickel salt and the soluble manganese salt each independently has a concentration of 0.5-3 mol/L, for example, 0.5 mol/L, 0.6 mol/L, 2.9 mol/L and 3 mol/L; and the soluble nickel salt and the soluble manganese salt are mixed according to a molar ratio (0.3-0.4): (0.6-0.7) of nickel to manganese, for example, (0.3, 0.31, 0.39, 0.4): (0.6, 0.61, 0.69, 0.7).

In the present disclosure, no metal cobalt is added in the process of preparing the precursor, and the raw material cost is reduced and no environmental pollution is caused compared with a ternary nickel-cobalt-manganese precursor. Moreover, the precursor prepared in the present disclosure still has the excellent electrochemical performance and the excellent energy density.

In S200, in the presence of nitrogen, a part of the mixed metal salts and a precipitant are stirred for co-precipitation in an ultrasonic environment.

In this step, the part of the mixed metal salts and the precipitant are stirred for co-precipitation in the ultrasonic environment in the presence of nitrogen, where under the action of ultrasound, the reaction system is more uniform and the metal salts contact and react with the precipitant more smoothly so that a reaction solution containing primary nanoparticles having a small particle size can be obtained.

In an embodiment, the precipitant is at least one selected from sodium carbonate, ammonium carbonate, ammonium bicarbonate and ammonia.

In an embodiment, the precipitant is sodium carbonate, that is, the precursor is prepared in an ammonia-free system, which is environmentally friendly.

In an embodiment, sodium carbonate has a concentration of 1-5 mol/L, for example, 1 mol/L, 1.1 mol/L, 4.9 mol/L or 5 mol/L.

In an embodiment, ammonium carbonate has a concentration of 1-4 mol/L, for example, 1 mol/L, 1.1 mol/L, 3.9 mol/L or 4 mol/L.

In an embodiment, ammonium bicarbonate has a concentration of 1-4 mol/L, for example, 1 mol/L, 1.1 mol/L, 3.9 mol/L or 4 mol/L.

In an embodiment, ammonium has a concentration of 2-12 mol/L, for example, 2 mol/L, 2.1 mol/L, 11.9 mol/L or 12 mol/L.

In an embodiment, a reaction kettle is placed in an ultrasonic water bath and then equipped with a stirrer, sealing device, liquid addition device, vent pipe, baffle, online pH meter, thermometer, etc. Then, nitrogen is continuously introduced into the ultrasonic water bath as a protective gas, and the part of the mixed metal salts and the precipitant are quickly (within 2 minutes) added via concurrent flow to the reaction kettle and continuously subjected to ultrasound as well as quick stirring. In this process, nitrogen is introduced at a flowrate of 0.1-0.2 L/min, the stirring is carried out at a rotational speed of 700-100 rpm such as 700 rpm, 710 rpm, 990 rpm or 1000 rpm, the molar ratio of the mixed metal salts to the precipitant is 1: (2-4) such as 1: (2, 2.1, 3.9, 4), and the ultrasonic intensity is 30-50 Hz such as 30 Hz, 31Hz, 49Hz or 50Hz. The inventors have found that too low an ultrasonic intensity causes the prepared primary nanoparticles to have too large a particle size so that the subsequent reaction time would be shortened for preparing a precursor having a small particle size. Thereby the prepared precursor is loose and not compact, and the tapped density is very low. The inventors have also found that too high an ultrasonic intensity causes the primary nanoparticles generated in the system to have too small a particle size so that ultra-fine nanoparticles are formed. Such particles are difficult to grow and cannot be used for preparing micron-level materials. Therefore, the ultrasound should not be greater than 50 Hz during preparation of cores. In addition, excessive ultrasound causes serious noise pollution and a small increase in cost. Moreover, in this step, the co-precipitation reaction is carried out for 60-180 minutes such as 60 minutes, 61 minutes, 179 minutes or 180 minutes at a temperature of 40-70 degrees Celsius such as 40 degrees Celsius, 41 degrees Celsius, 69 degrees Celsius or 70 degrees Celsius. In addition, the primary nanoparticles in the obtained reaction solution containing primary nanoparticles have a particle size of 50-500 nm.

In an embodiment, nitrogen has a flowrate of 0.1 L/min.

In S300, another part of the mixed metal salts and the precipitant are continuously added to the reaction solution containing primary nanoparticles for continual co-precipitation and then aging is carried out.

In this step, the other part of the mixed metal salts and the precipitant are continuously added to the reaction solution containing primary nanoparticles in the reaction kettle so that the mixed metal salts and the precipitant are subjected to the co-precipitation with the primary nanoparticles having a small particle size as seeds. The obtained slurry overflows into an aging tank to be stirred and aged so that the precipitated particles continuously grow and an aged material is obtained.

In an embodiment, in this process, the mixed metal salts and the precipitant are added at a speed of 1-3 mL/min, for example, 1 mL/min, 1.1 mL/min, 2.9 mL/min or 3 mL/min. The inventors have found that too high a speed causes too fast a reaction so that the resulting precursor is loose and the tapping is low, and too low a speed causes too long a reaction and an increase in cost. The pH during the co-precipitation reaction is controlled to be 8.2-9 such as 8.2, 8.3, 8.9 or 9. The inventors have found that too high a pH causes precipitates to form loose clusters of small particles rather than spheres, and too low a pH causes the precipitate to agglomerate seriously and the resulting particle clusters are different in morphology. Moreover, the co-precipitation reaction is carried out for 10-20 hours, for example, 10 hours, 11 hours, 19 hours or 20 hours. In addition, the aging in the aging tank is carried out for 10-30 hours, for example, 10 hours, 11 hours, 29 hours or 30 hours.

In an embodiment, the precipitant and the mixed metal salts are the same as those in step S200 and are not be repeated here.

In S400, the aged material is mixed with a detergent through stirring.

In this step, the aged material is mixed with the detergent through stirring to obtain a material after primary washing. In this process, the stirring is carried out at a rotational speed of 500-700rpm such as 500 rpm, 510 rpm, 690 rpm or 700 rpm for 0.1-5 hours such as 0.1 hour, 0.2 hour, 4.9 hours or 5 hours. Moreover, the detergent in this process is conventional detergents in the art and may be, for example, an aqueous ammonia solution with a pH of 12. It is to be noted that those skilled in the art can select the amount of detergent added according to actual requirements as long as partial sodium and sulfur in the aged material can be removed.

In S500, the material after primary washing is subjected to primary dehydration.

In this step, the obtained material after primary washing is subjected to primary dehydration to obtain a material after primary dehydration. Specifically, the primary dehydration may be carried out by a centrifuge, and the moisture content in the material after primary dehydration is not higher than 10wt%.

In S600, the material after primary dehydration is stirred for secondary washing and dehydration.

In this step, the obtained material after primary dehydration is subjected to secondary washing and dehydration to obtain a material after secondary dehydration. Specifically, the material after primary dehydration is subjected to secondary washing with pure water to further remove impurities such as sodium and sulfur in the material after primary dehydration. Those skilled in the art can select the amount of pure water and the rotational speed and duration of the stirring according to actual requirements as long as the material after primary dehydration can be washed until the content of sodium and the content of sulfur content are qualified. Moreover, this dehydration may also be carried out by centrifuge, and the moisture content in the material after second dehydration is not higher than 10wt%.

In S700, the material after secondary dehydration is dried and sieved for iron removal.

In this step, the obtained material after secondary dehydration is dried and sieved for iron removal to obtain the binary lithium-rich carbonate precursor. It is to be noted that the processes of drying and sieving for iron removal are conventional operations in the art, can be selected by those skilled in the art according to actual requirements, and are not be repeated here.

In an embodiment, in step S200, the stirring is ultrasound.

In a method for preparing the binary lithium-rich carbonate precursor provided in an embodiment of the present disclosure, mixed metal salts containing a soluble nickel salt and a soluble manganese salt are co-precipitated with a precipitant in an ultrasonic environment in the presence of nitrogen, where under the action of ultrasound, the reaction system is more uniform and the metal salts contact and react with the precipitant more smoothly so that a reaction solution containing primary nanoparticles having a small particle size can be obtained; then, the mixed metal salts and the precipitant are continuously added to the reaction solution containing primary nanoparticles, that is, the primary nanoparticles having a small particle size are used as seeds for co-precipitation; finally, after aging and the subsequent procedures of washing, dehydration, drying and sieving for iron removal, the binary lithium-rich carbonate precursor can be prepared. The binary lithium-rich carbonate precursor has the structure of a solid sphere and the advantages of a controllable particle size, uniform particle size distribution, high sphericity, a smooth spherical surface, excellent electrochemical performance and an excellent energy density and can be stably produced in both an ammonia system and an ammonia-free system. Especially in the ammonia-free system, no ammonia-containing wastewater is produced so that the binary lithium-rich carbonate precursor is environmentally friendly. At the same time, the binary lithium-rich carbonate precursor contains no metal cobalt and has the reduced raw material cost and causes no environmental pollution compared with a ternary nickel-cobalt-manganese precursor. In addition, a cathode material prepared by use of the precursor obtained by the method has a relatively high specific capacity and excellent cycle performance and electrochemical discharge performance. It is to be noted that the features and advantages described above for the binary lithium-rich carbonate precursor are also applicable to the method for preparing the binary lithium-rich carbonate precursor and will not be repeated here.

In an embodiment, the present disclosure provides a cathode material, which is prepared by use of the preceding precursor or the precursor prepared by the preceding method. Therefore, the cathode material has a relatively high specific capacity and excellent cycle performance and electrochemical discharge performance.

In an embodiment, the present disclosure provides a lithium battery having the preceding cathode material. Therefore, the lithium battery has a long cycle life as well as high specific energy.

In an embodiment, the present disclosure provides a vehicle having the preceding lithium battery. Therefore, the vehicle loaded with the preceding lithium battery with high specific energy and a long cycle life has an excellent cruising distance, thereby meeting the requirements of consumers.

Embodiments of the present disclosure are described in detail below. It is to be noted that the embodiments described below are illustrative and only for explaining the present disclosure and not to be construed as limiting the present disclosure. In addition, unless expressly stated, all reagents used in the embodiments described below are commercially available or can be synthesized according to the present disclosure or known methods. Reaction conditions that are not listed are also easy to obtain by those skilled in the art.

### Example 1

(1) Nickel sulfate and manganese sulfate were mixed according to a molar ratio 0.30: 0.70 of nickel to manganese to obtain mixed metal salts, where nickel sulfate and manganese sulfate in the mixed metal salts each had a concentration of 0.5 mol/L.
(2) A reaction kettle was placed in an ultrasonic water bath, nitrogen was continuously introduced into the ultrasonic water bath as a protective gas at a flowrate of 0.1 L/min, ultrasound (with an ultrasonic intensity of 30 Hz) was turned on, the mixed metal salts and sodium bicarbonate (with a concentration of 1 mol/L) were quickly (within 30 seconds) added via concurrent flow to the reaction kettle at a molar ratio of 1: 3, and quickly stirred (at a rotational speed of 800 rpm), the temperature of the reaction kettle was stabilized at 45 degrees Celsius, and after 60 minutes, the ultrasound was turned off to obtain a reaction solution containing primary nanoparticles, where the primary nanoparticles in the reaction solution had a particle size of 50-500 nm.
(3) The mixed metal salts and sodium bicarbonate (sodium bicarbonate had a concentration of 1 mol/L and the mixed metal salts and sodium bicarbonate were mixed at the same ratio as in step (2)) were continuously added to the reaction kettle at a flowrate of 1 mL/min so that the mixed metal salts and sodium bicarbonate were subjected to a co-precipitation reaction with the primary nanoparticles having a small particle size as seeds for 10 h. In the process, the pH was controlled to be 8.2. The obtained slurry overflowed into an aging tank and continued to be stirred in the aging tank for 20 h to obtain an aged material.
(4) At a rotational speed of 600 rpm, the aged material and an aqueous ammonia solution with a pH of 12 were mixed and stirred for 1 hour to obtain a material after primary washing.
(5) The obtained material after primary washing was dehydrated by a centrifuge to obtain a material after primary dehydration, where the moisture content in the material after primary dehydration was not higher than 10wt%.
(6) The obtained material after primary dehydration was washed with pure water and dehydrated to obtain a material after secondary dehydration, where the moisture content in the material after secondary dehydration was not higher than 10wt%.
(7) The material after secondary dehydration was dried and sieved for iron removal to obtain a binary lithium-rich carbonate precursor, which had a particle size of 1.5 microns and a chemical formula of Ni_{0.3}Mn_{0.7}CO₃.

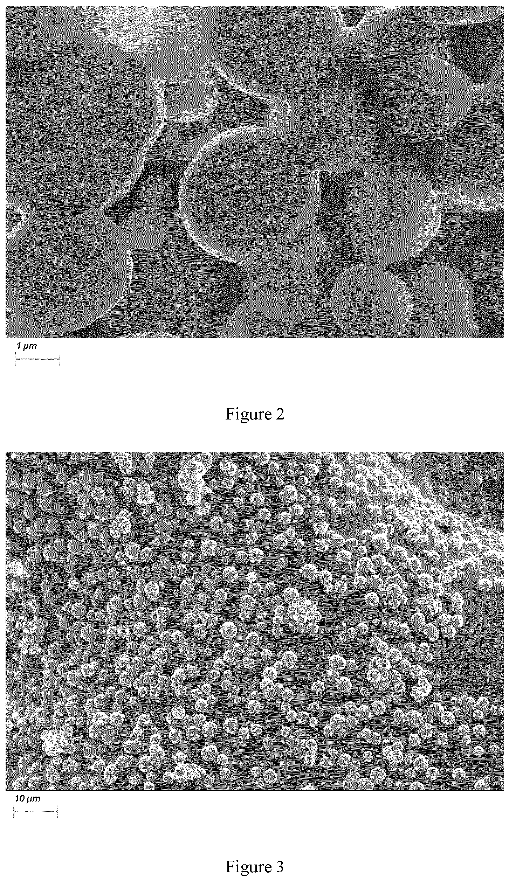

FIG. 2 shows an image of the binary lithium-rich carbonate precursor on a scanning electron microscope according to an embodiment of the present disclosure. FIG. 3 is a plane view of the image of the binary lithium-rich carbonate precursor on the scanning electron microscope. It can be seen from FIGS. 2 and 3 that the precursor obtained by this method had the structure of a sphere, uniform particle size distribution and a smooth surface.

A laser particle size analyzer was used for detecting the particle size distribution of the precursor and it was found that the particle size distribution was uniform.

The precursor and lithium hydroxide were mixed at a molar ratio of 1: 1.06, sintered for the first time in an air atmosphere at 500 degrees Celsius for 4 hours, then crushed, and sintered for the second time at 700 degrees Celsius for 25 hours to obtain a cathode material. The cathode material, SP (carbon black conductive agent) and polyvinylidene fluoride (PVDF) were mixed and pulped and stirred for several hours with N-methylpyrrolidone (NMP) as a solvent to prepare a lithium-ion half-cell. A LAND battery tester was used for charge and discharge tests at 4.8V, which showed that the product had a 0.1C discharge gram capacity of 314 mAh and a 1.0C discharge capacity of 245 mAh.

### Example 2

(1) Nickel sulfate and manganese sulfate were mixed according to a molar ratio 0.35: 0.65 of nickel to manganese to obtain mixed metal salts, where nickel sulfate and manganese sulfate in the mixed metal salts each had a concentration of 1 mol/L.
(2) A reaction kettle was placed in an ultrasonic water bath, nitrogen was continuously introduced into the ultrasonic water bath as a protective gas at a flowrate of 0.1 L/min, ultrasound (with an ultrasonic intensity of 40 Hz) was turned on, the mixed metal salts, sodium bicarbonate (with a concentration of 1.2 mol/L), and sodium carbonate (with a concentration of 0.3 mol/L) were quickly (within 60 seconds) added via concurrent flow to the reaction kettle according to a molar ratio 1: 2 of the mixed metal salts and the precipitant, and quickly stirred (at a rotational speed of 900 rpm), the temperature of the reaction kettle was stabilized at 50 degrees Celsius, and after 120 minutes, the ultrasound was turned off to obtain a reaction solution containing primary nanoparticles, where the primary nanoparticles in the reaction solution had a particle size of 50-500 nm.
(3) The mixed metal salts, sodium bicarbonate and sodium carbonate (sodium bicarbonate and sodium carbonate had the same concentration and the mixed metal salts and the precipitant were mixed at the same ratio as in step (2)) were continuously added to the reaction kettle at a flowrate of 1 mL/min so that the mixed metal salts, sodium bicarbonate and sodium carbonate were subjected to a co-precipitation reaction with the primary nanoparticles having a small particle size as seeds for 20 h. In the process, the pH was controlled to be 8.5. The obtained slurry overflowed into an aging tank and continued to be stirred in the aging tank for 24 h to obtain the aged material.
(4) At a rotational speed of 600 rpm, the aged material and an aqueous ammonia solution with a pH of 12 were mixed and stirred for 1 hour to obtain a material after primary washing.
(5) The obtained material after primary washing was dehydrated by a centrifuge to obtain a material after primary dehydration, where the moisture content in the material after primary dehydration was not higher than 10wt%.
(6) The obtained material after primary dehydration was washed with pure water and dehydrated to obtain a material after secondary dehydration, where the moisture content in the material after secondary dehydration was not higher than 10wt%.
(7) The material after secondary dehydration was dried and sieved for iron removal to obtain a binary lithium-rich carbonate precursor, which had a particle size of 2 microns and a chemical formula of Ni_{0.35}Mn_{0.65}CO₃.

It can be seen from an image of the precursor on a scanning electron microscope that the precursor obtained by this method had the structure of a sphere, uniform particle size distribution and a smooth surface.

A laser particle size analyzer was used for detecting the particle size distribution of the precursor and it was further found that the particle size distribution was uniform.

The precursor and lithium hydroxide were mixed at a molar ratio of 1: 1.06, sintered for the first time in an air atmosphere at 500 degrees Celsius for 4 hours, then crushed, and sintered for the second time at 700 degrees Celsius for 25 hours to obtain a cathode material. The cathode material, SP (carbon black conductive agent) and polyvinylidene fluoride (PVDF) were mixed and pulped and stirred for several hours with N-methylpyrrolidone (NMP) as a solvent to prepare a lithium-ion half-cell. A LAND battery tester was used for charge and discharge tests at 4.8V, which showed that the product had a 0.1C discharge gram capacity of 312 mAh and a 1.0C discharge capacity of 240 mAh.

### Example 3

(1) Nickel chloride and manganese chloride were mixed according to a molar ratio 0.4: 0.6 of nickel to manganese to obtain mixed metal salts, where nickel chloride and manganese chloride in the mixed metal salts each had a concentration of 1.5 mol/L.
(2) A reaction kettle was placed in an ultrasonic water bath, nitrogen was continuously introduced into the ultrasonic water bath as a protective gas at a flowrate of 0.1 L/min, ultrasound (with an ultrasonic intensity of 50 Hz) was turned on, the mixed metal salts, sodium bicarbonate (with a concentration of 2 mol/L), and ammonium bicarbonate (with a concentration of 1 mol/L) were quickly (within 90 seconds) added via concurrent flow to the reaction kettle according to a molar ratio 1: 4 of the mixed metal salts and the precipitant, and quickly stirred (at a rotational speed of 1000 rpm), the temperature of the reaction kettle was stabilized at 40 degrees Celsius, and after 180 minutes, the ultrasound was turned off to obtain a reaction solution containing primary nanoparticles, where the primary nanoparticles in the reaction solution had a particle size of 50-500 nm.
(3) The mixed metal salts, sodium bicarbonate and ammonium bicarbonate (sodium bicarbonate and ammonium bicarbonate had the same concentration and the mixed metal salts and the precipitant were mixed at the same ratio as in step (2)) were continuously added to the reaction kettle at a flowrate of 1 mL/min so that the mixed metal salts, sodium bicarbonate and ammonium bicarbonate were subjected to a co-precipitation reaction with the primary nanoparticles having a small particle size as seeds for 15 h. In the process, the pH was controlled to be 9. The obtained slurry overflowed into an aging tank and continued to be stirred in the aging tank for 15 h to obtain the aged material.
(4) At a rotational speed of 600 rpm, the aged material and an aqueous ammonia solution with a pH of 12 were mixed and stirred for 1 hour to obtain a material after primary washing.
(5) The obtained material after primary washing was dehydrated by a centrifuge to obtain a material after primary dehydration, where the moisture content in the material after primary dehydration was not higher than 10wt%.
(6) The obtained material after primary dehydration was washed with pure water and dehydrated to obtain a material after secondary dehydration, where the moisture content in the material after secondary dehydration was not higher than 10wt%.
(7) The material after secondary dehydration was dried and sieved for iron removal to obtain a binary lithium-rich carbonate precursor, which had a particle size of 1.2 microns and a chemical formula of Ni_{0.4}Mn_{0.6}CO₃.

It can be seen from an image of the precursor on a scanning electron microscope that the precursor obtained by this method had the structure of a sphere, uniform particle size distribution and a smooth surface.

A laser particle size analyzer was used for detecting the particle size distribution of the precursor and it was further found that the particle size distribution was uniform.

The precursor and lithium hydroxide were mixed at a molar ratio of 1: 1.06, sintered for the first time in an air atmosphere at 500 degrees Celsius for 4 hours, then crushed, and sintered for the second time at 700 degrees Celsius for 25 hours to obtain a cathode material. The cathode material, SP (carbon black conductive agent) and polyvinylidene fluoride (PVDF) were mixed and pulped and stirred for several hours with N-methylpyrrolidone (NMP) as a solvent to prepare a lithium-ion half-cell. A LAND battery tester was used for charge and discharge tests at 4.8V, which showed that the product had a 0.1C discharge gram capacity of 310 mAh and a 1.0C discharge capacity of 242 mAh.

### Example 4

(1) Nickel sulfate and manganese sulfate were mixed according to a molar ratio 0.30: 0.70 of nickel to manganese to obtain mixed metal salts, where nickel sulfate and manganese sulfate in the mixed metal salts each had a concentration of 0.5 mol/L.
(2) A reaction kettle was placed in an ultrasonic water bath, nitrogen was continuously introduced into the ultrasonic water bath as a protective gas at a flowrate of 0.1 L/min, ultrasound (with an ultrasonic intensity of 50 Hz) was turned on, the mixed metals salt and sodium bicarbonate (with a concentration of 1 mol/L) were quickly (within 30 seconds) added via concurrent flow to the reaction kettle at a molar ratio of 1: 3, and quickly stirred (at a rotational speed of 850 rpm), the temperature of the reaction kettle was stabilized at 45 degrees Celsius, and after 60 minutes, the ultrasound was turned off to obtain a reaction solution containing primary nanoparticles, where the primary nanoparticles in the reaction solution had a particle size of 50-500 nm.
(3) The mixed metal salts and sodium bicarbonate (sodium bicarbonate had a concentration of 1 mol/L and the mixed metal salts and sodium bicarbonate were mixed at the same ratio as in step (2)) were continuously added to the reaction kettle at a flowrate of 2 mL/min so that the mixed metal salts and sodium bicarbonate were subjected to a co-precipitation reaction with the primary nanoparticles having a small particle size as seeds for 10 h. In the process, the pH was controlled to be 8.5. The obtained slurry overflowed into an aging tank and continued to be stirred in the aging tank for 15 h to obtain the aged material.
(4) At a rotational speed of 700 rpm, the aged material and an aqueous ammonia solution with a pH of 12 were mixed and stirred for 1 hour to obtain a material after primary washing.
(5) The obtained material after primary washing was dehydrated by a centrifuge to obtain a material after primary dehydration, where the moisture content in the material after primary dehydration was not higher than 10wt%.
(6) The obtained material after primary dehydration was washed with pure water and dehydrated to obtain a material after secondary dehydration, where the moisture content in the material after secondary dehydration was not higher than 10wt%.
(7) The material after secondary dehydration was dried and sieved for iron removal to obtain a binary lithium-rich carbonate precursor, which had a particle size of 1.5 microns and a chemical formula of NNi_{0.30}Mn_{0.70}CO₃.

It can be seen from an image of the precursor on a scanning electron microscope that the precursor obtained by this method had the structure of a sphere, uniform particle size distribution and a smooth surface.

A laser particle size analyzer was used for detecting the particle size distribution of the precursor and it was further found that the particle size distribution was uniform.

The precursor and lithium hydroxide were mixed at a molar ratio of 1: 1.06, sintered for the first time in an air atmosphere at 500 degrees Celsius for 4 hours, then crushed, and sintered for the second time at 700 degrees Celsius for 25 hours to obtain a cathode material. The cathode material, SP (carbon black conductive agent) and polyvinylidene fluoride (PVDF) were mixed and pulped and stirred for several hours with N-methylpyrrolidone (NMP) as a solvent to prepare a lithium-ion half-cell. A LAND battery tester was used for charge and discharge tests at 4.8V, which showed that the product had a 0.1C discharge gram capacity of 311 mAh and a 1.0C discharge capacity of 239 mAh.

## Claims

1. A binary lithium-rich carbonate precursor having a chemical formula of Ni_{(1-X)}Mn_{X}CO₃, wherein X is 0.6 to 0.7.

2. The precursor according to claim 1, wherein the precursor has a particle size of 1 micron to 2 microns.

3. A method for preparing the precursor according to claim 1 or 2, comprising:
(1) mixing a soluble nickel salt and a soluble manganese salt to obtain mixed metal salts;
(2) in the presence of nitrogen, stirring a part of the mixed metal salts and a precipitant for co-precipitation in an ultrasonic environment to obtain a reaction solution containing primary nanoparticles;
(3) continuously adding another part of the mixed metal salts and the precipitant to the reaction solution containing primary nanoparticles for continual co-precipitation and then carrying out aging to obtain an aged material;
(4) mixing the aged material with a detergent through stirring to obtain a material after primary washing;
(5) subjecting the material after primary washing to primary dehydration to obtain a material after primary dehydration;
(6) stirring the material after primary dehydration for secondary washing and dehydration to obtain a material after secondary dehydration; and
(7) drying the material after secondary dehydration and sieving the dried material for iron removal to obtain the binary lithium-rich carbonate precursor.

4. The method according to claim 3, wherein in step (1), the soluble nickel salt and the soluble manganese salt are mixed according to a molar ratio (0.3-0.4): (0.6-0.7) of nickel to manganese.

5. The method according to claim 3 or 4, wherein in step (1), in the mixed metal salts, the soluble nickel salt and the soluble manganese salt each independently has a concentration of 0.5-3 mol/L.

6. The method according to any one of claims 3 to 5, wherein in step (1), the soluble nickel salt is at least one selected from nickel chloride and nickel sulfate.

7. The method according to any one of claims 3 to 6, wherein in step (1), the soluble manganese salt is at least one selected from manganese chloride and manganese sulfate.

8. The method according to any one of claims 3 to 7, wherein in step (2), the stirring is carried out at a rotational speed of 700-100 rpm.

9. The method according to any one of claims 3 to 8, wherein in step (2), a molar ratio of the mixed metal salts to the precipitant is 1: (2-4).

10. The method according to any one of claims 3 to 9, wherein in step (2), the co-precipitation is carried out for 60-180 minutes at an ultrasonic intensity of 30-50 Hz and a temperature of 40-70 degrees Celsius.

11. The method according to any one of claims 3 to 10, wherein in step (2), the primary nanoparticles in the reaction solution containing primary nanoparticles have a particle size of 50-500 nanometers.

12. The method according to any one of claims 3 to 11, wherein in step (2), the precipitant is at least one selected from sodium carbonate, ammonium carbonate, ammonium bicarbonate and ammonia.

13. The method according to claim 12, wherein in step (2), the sodium carbonate has a concentration of 1-5 mol/L.

14. The method according to claim 12 or 13, wherein in step (2), the ammonium carbonate has a concentration of 1-4 mol/L.

15. The method according to any one of claims 12 to 14, wherein in step (2), the ammonium bicarbonate has a concentration of 1-4 mol/L.

16. The method according to any one of claims 12 to 15, wherein in step (2), the ammonium has a concentration of 2-12 mol/L.

17. The method according to any one of claims 3 to 16, wherein in step (3), the mixed metal salts and the precipitant are added at a speed of 1-3 mL/min.

18. The method according to any one of claims 3 to 17, wherein in step (3), the co-precipitation is carried out for 10-20 hours at a controlled pH of 8.2-9.

19. The method according to any one of claims 3 to 18, wherein in step (3), the aging is carried out for 10-30 hours.

20. A cathode material prepared by use of the precursor according to claim 1 or 2 or the precursor obtained by the method according to any one of claims 3 to 19.

21. A lithium battery having the cathode material according to claim 20.

22. A vehicle having the lithium battery according to claim 21.
